# EUROPEAN PATENT APPLICATION

(11) **EP 3 182 358 A1**
(43) Date of publication of application: **21.06.2017**
(21) Application number: 15201410.6
(22) Date of filing: 18.12.2015
(51) Int. Cl.: G06Q 20/34

(54) **SYSTEM AND METHOD FOR USING MULTIPLE BALANCES WITH A SINGLE PAYMENT DEVICE**

(71) Applicant: Mastercard International Incorporated, Purchase NY 10577 (US)
(72) Inventor: ROBERTS, Dave, Warrington, WA4 5RD (GB); HUANG, Donghao, Purchase, NY 10577 (US); LI, Jiaming, Purchase, NY 10577 (US); JOYSON, Bensam, Purchase, NY 10577 (US); TANG, Hao, Purchase, NY 10577 (US); CHIN, Yong Wei, Purchase, NY 10577 (US)
(74) Representative: Lawrence, Richard Anthony

(57) **Abstract**

A transaction system for performing transactions with multiple balances within a single transaction. The transaction system comprises a payment device programmed to record multiple balances and a terminal programmed to interact with the payment device in order to complete a transaction by debiting multiple balances of the payment device within a single transaction. A method of transacting with a transaction device, a payment device and a method of providing commodities to a payment device user are also provided.

## Description

### Field of Disclosure

The present invention relates to methods and apparatus for managing multiple account balances in transaction systems. Embodiments of the present invention are particularly appropriate for use where multiple balances are advantageously managed on a single device, in particular where elements of a transaction system are only intermittently in contact with each other.

### Background of Disclosure

EMV is a financial transaction system based around the use of payment devices contact and contactless transaction cards. In the EMV payment model, an issuing bank provides an account holding customer with a smart card (or other token) to use when making payments. An acquiring bank provides a merchant with a compatible terminal device to use when accepting payments. The term "terminal" here is considered to cover any device that interfaces directly with such a transaction card (e.g. an interface allowing user entry of a personal identification number (PIN) such as a PIN pad or PIN Entry Device (PED), or a POS terminal or ATM device comprising means such as these, to allow interaction with a transaction card).

Transaction systems using the EMV specification may support offline transactions between a payment card or device and a terminal even when the terminal is not in communication with the main transaction system. Such transactions have additional challenges, such as added risk as the risk management services provided by the main transaction system are not available.

Intermittent connection may arise, for example, in conflict regions or after a natural disaster, or any other circumstance in which normal communication networks such as the wired or wireless telecommunications infrastructure may be wholly or partially disabled. In such circumstances, it is very important that transactions can still be realised at least for the purchase of essential commodities, and that aid programmes can provide people in need of it with the means to purchase these commodities, as and when these means are available.

### Summary of Disclosure

In a first aspect, the disclosure provides a method of transacting with a transacting device using multiple balances, the method being implemented by interaction between a payment device and a terminal of a transaction system, the method comprising: retaining multiple balances on a payment device; establishing a transaction between the payment device and a terminal of the transaction system, wherein the transaction is defined by value amounts in a plurality of value types; completing the transaction by debiting multiple balances of the payment device by amounts corresponding to the value amounts in the plurality of value types defining the transaction. In preferred embodiments, the different balances may relate to different value types.

In some embodiments, multiple sets of balances may coexist on a payment device. Advantageously, the method may include providing instructions whereby each set of balances can be individually created, deleted or updated. Preferably, a set of balances may be associated with a profile identifier, and administration of a set of balances may be conditional on the profile identifier.

In embodiments, the method may further comprise providing instructions to specifically modify the balances associated with one or more of the multiple balances. In some embodiments, the instructions may be generated prior to the initiation of a transaction, without requiring data from the payment device. In preferred embodiments, instructions to modify balances may be provided in the form of scripts that are generated in advance, held at the terminal and securely delivered to the payment device.

In embodiments, the method may further comprise delivering an ordered sequence of instructions to a payment device. In advantageous embodiments, the method may further comprise identifying instructions that should be applied out of sequence without preventing the delivery of subsequent instructions in a sequence. Preferably, the method may further comprise storing information identifying the instructions applied, until instructions have been applied that comprise an ordered sequence up to and including the out of sequence instructions.

Optionally, establishing a transaction according to the method of the disclosure may further comprises obtaining a token from the payment device, wherein the token can be interpreted by a payment application to determine whether instructions to administer balances or sets of balances should be communicated to the payment device.

Advantageously, establishing a transaction may comprise obtaining from the payment device information about each balance and/or set of balances retained on the payment device.

In particularly convenient embodiments, the method according to the disclosure may be implemented according to EMV specifications.

In a second aspect, the disclosure provides a payment device programmed to perform any of the embodiments of the method above.

In a third aspect, the disclosure provides a transaction system for performing transactions with multiple balances within a single transaction, wherein the system comprises: a payment device programmed to record multiple balances; and a terminal programmed to interact with the payment device in order to complete a transaction by debiting multiple balances of the payment device within a single transaction. In embodiments, the transaction system may be configured such that the multiple balances relate to different value types. In advantageous embodiments, the transaction system may be configured such that multiple sets of balances may coexist on a payment device, and such that each set of balances may be individually created, deleted or updated. Preferably, the terminal may be programmed to provide instructions to specifically modify the balances associated with one or more of the multiple balances. In some embodiments, the instructions may be generated prior to the initiation of the transaction, without requiring data from the payment device. Advantageously, instructions to modify balances may be provided in the form of scripts that are generated in advance, held at the terminal and securely delivered to the payment device.

In some embodiments, the card may be programmed to receive an ordered sequence of instructions and identify instructions that should be applied out of sequence. Advantageously, the payment device may be programmed to store information identifying the instructions applied, until instructions have been applied that comprise an ordered sequence up to and including the out of sequence instructions.

In some embodiments, the transaction system may further comprise profile identifiers, such that each set of balances may be associated with a profile identifier, and administration of a set of balances may be conditional on the profile identifier.

Optionally, the payment device may be programmed to provide a token to the terminal, wherein the token can be interpreted by a payment application to determine whether instructions to administer balances or sets of balances should be communicated by the terminal to the payment device.

Conveniently, the terminal may be programmed to interrogate the payment device to obtain information about each of the balances and/or sets of balances recorded on the payment device.

In some embodiments, the transaction system may further comprise a programme manager that provides commodities to users by modifying one or more balances on the payment device.

In convenient embodiments, the payment device and terminal may be programmed according to EMV specifications.

In a fourth aspect, the disclosure provides a method of providing commodities to users as part of a programme, wherein the method comprises providing a user with the payment device according to the second aspect of this disclosure.

### Brief Description of Figures

Embodiments of the disclosure will now be described, by way of example, with reference to the accompanying Figures, of which:
Figure 1 shows elements of a payment infrastructure in which embodiments of the invention may be used;
Figure 2 shows in schematic form a transaction card adapted for use in embodiments of the invention;
Figure 3 shows in schematic form a terminal adapted for use in embodiments of the invention;
Figure 4 shows in flow diagram form a method of managing programmes according to a general embodiment of the invention;
Figure 5 shows in flow diagram form a method of performing a transaction according to a general embodiment of the invention.
Figure 6 shows a detailed example of a transaction flow between a card and a terminal, according to a general embodiment of the invention.

### Description of Specific Embodiments

Specific embodiments of the invention will be described below with reference to the Figures. The embodiments described below relate to a payment card used as a transaction device for payments with POI (point of interaction) terminals (such as a POS - point of sale - terminal) under the EMV protocols indicated above. As is discussed further below, further embodiments may be used in other transaction systems and contexts. For example, other types of payment devices may be used, such as mobile devices or any device capable of establishing an interaction with a terminal in order to complete a transaction.

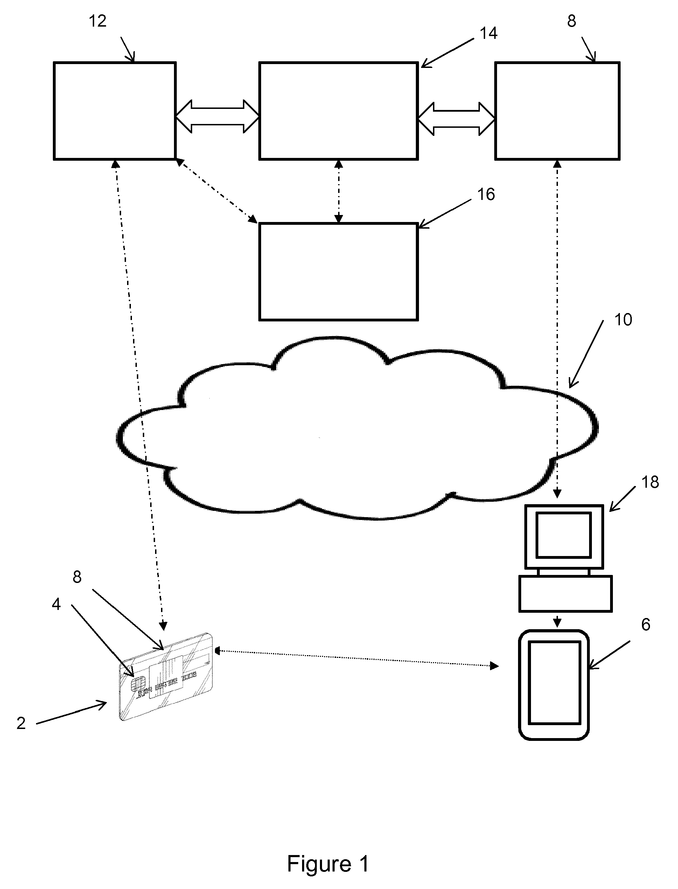

Figure 1 shows schematically relevant elements of a payment infrastructure in which embodiments of the invention may be used.

A user (not shown) is provided with a payment device in the form of a payment card 2 (as discussed above, in other embodiments other transaction devices may be used). The payment card 2 comprises a chip 4 with a processor and a memory. The chip 4 is here able to contact a terminal 6 to enable contact card protocols such as those defined under ISO/IEC 7816 to be followed. This payment card 2 may also have a magnetic stripe 8 to allow a transaction to be carried out using magnetic stripe protocols. The payment card 2 may also comprise an antenna and associated hardware and software to enable communication with a terminal by NFC and associated contactless card protocols such as those defined under ISO/IEC 14443.

Other computer equipment in the infrastructure may be fixed or mobile, such as point of interaction (POI) terminals 6, of which the example shown is a point-of-sale (POS) terminal used by a merchant interacting with the user. The POS terminal 6 interacts with the payment card 2 through a card reader (not shown discretely from POS terminal 6). The merchant POS terminal 6 is connectable to an acquiring bank 8 or other system, either directly or via a merchant terminal 18, preferably in a secure way via a network 10 (either through a dedicated channel or through a secure communication mechanism over a public or insecure channel). As discussed below, in embodiments of this invention this connection between merchant POS terminal and acquiring bank 8 is intermittent. Through the medium of terminals or otherwise, the payment card 2 may similarly intermittently be put into connection with a card issuing bank 12 or system associated with the user.

A banking infrastructure 14 connects the card issuer 12 and the acquiring bank 8, allowing transactions to be carried out between them. This banking infrastructure will typically be provided by a transaction card provider who provides transaction card services to the card issuing bank 12. The banking infrastructure 14 provides authorisation at the time of purchase (when online connection is available) or when a transaction report is provided as and when a connection is established, clearing of the transaction and reconciliation typically within the same working day, and settlement of payments shortly after that. The banking infrastructure 14 comprises a plurality of switches, servers and databases, and is not described further here as the details of the banking infrastructure used are not necessary for understanding how embodiments of the invention function and may be implemented

One or more programme managers 16 communicate with the banking infrastructure 14, and with the card issuer 12. The programme managers 16 provide information to the payment card 2 to determine and modify as required the available balance under a specified programme. The programme manager 16 also receives collected transaction reports from POS terminals via the banking infrastructure 14 in order to be able to pay the corresponding amounts to the acquiring bank 8 associated with a POS terminal 6, via the banking infrastructure 14. The programme manager infrastructure may comprise a plurality of switches, servers and databases, and is not described further here as the details of the programme manager infrastructure used are not necessary for understanding how embodiments of the invention function and may be implemented.
- In convenient embodiments, the invention may work as part of conventional transaction infrastructure as described above. In some embodiments, some of the elements of the conventional infrastructure described above may be omitted and/or some of the above elements may provide some or all of the functionalities of the card issuing bank, acquiring bank and banking infrastructure. In particular, in convenient embodiments, the system may function without the need for a banking infrastructure. In such embodiments, once a transaction or set of transactions in a transaction report has been verified by the programme manager, the merchant's bank account may be immediately credited with the corresponding amount, as agreed with the programme manager 16.

A merchant terminal 18 communicates with the merchant POS terminal 6 and the bank 8 or the programme manager 16, directly or via the banking infrastructure 14. The merchant terminal 18 holds the scripts used for the functioning of the invention, as further described below. In some embodiments, the merchant terminal functionalities may be included in the POS terminal functionalities - for example, there may be a single terminal with scripts used in embodiments of the invention implemented as an application on the terminal. In convenient embodiments, the merchant POS terminal 6 may be a mobile point of sale terminal (MPOS).

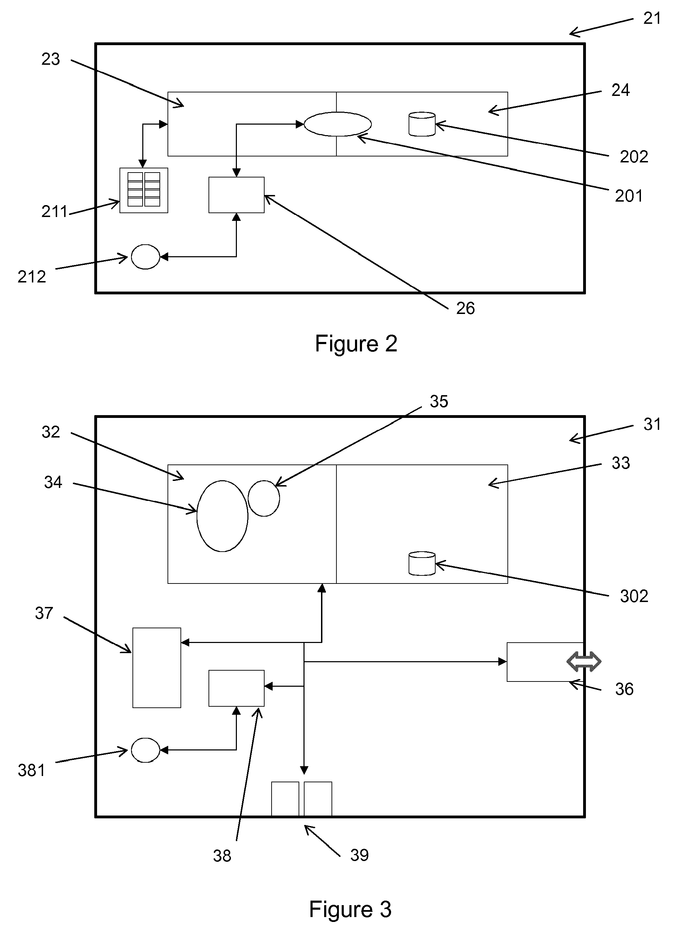

Figure 2 shows schematically relevant parts of a representative hardware and software architecture for a transaction card such as a payment card 21 (particularly an EMV payment card) suitable for implementing an embodiment of the invention. The payment card 21 comprises an application processor 23, one or more memories 24 associated with the application processor and a NFC controller 26. The payment card 21 is equipped with a contact pad 211 for contact transactions using contact card protocols such as ISO/IEC 7816 and also comprises an antenna 212 connected to NFC controller 26 to allow transactions under contactless card protocols such as those defined under ISO/IEC 14443.

In the arrangement shown, the application processor 23 and associated memories 24 comprise (shown within the processor space, but with code and data stored within the memories) a transaction application 201. The memories 24 may contain a storage location 202 for data associated with programmes held by the card. The application processor 23 provides an NFC application 207 which interfaces with the NFC controller 26. A transaction may be performed over a contact card interface, a contactless card interface, or any other communication channel available to the card for communicating with a terminal (either general purpose or dedicated to the purpose).

Figure 3 illustrates the functional features of a terminal for use in embodiments of the invention in more detail. The terminal 31 has a processor 32 and associated memories 33. The base function of the terminal in the case shown is to operate as a point of interaction (POI) with a financial system - such a terminal may be a point of sale (POS) terminal or an automated teller machine (ATM) for example. In other embodiments, the terminal may have another function altogether (for example, a security system terminal for evaluating user credentials). In the case shown, the terminal 31 has an operating system 34 and transaction software 35 (these may be provided together in a single assemblage of code, or may both be divided into a number of different components, but are represented here as two elements for convenience). The operating system 34 manages hardware resources and provides common services for applications, whereas the transaction software 35 performs the base function of the terminal and may be provided (for example) as one or more applications. The terminal 31 will generally have a protected channel 36 to another party such as an acquiring bank (this may, for example, be performed over a public network by use of encryption) - embodiments of the invention have particular value in situations where this protected channel 36 is only sporadically available to the terminal 31.

The terminal 31 will also have means to make a connection to a device such as a transaction card. In this case, the terminal has a contact card reader 37 and an NFC controller 38 and antenna 381 to allow a contactless card connection to a contactless card, or a device such as an NFC-enabled mobile telephone able to act as a proxy for a contactless card. The terminal 31 may have additional ports 39 to allow data to be provided to it from other sources (for example, by USB stick). The memories 33 contain a storage location 302 for a set of scripts to be transmitted to a payment card, and for transaction data that is sent periodically to a banking infrastructure 14. Transactions may be established through the contact card reader 37 or through the NFC controller 38, or indeed any other appropriate local connection. Data (e.g. transaction data, scripts etc) may be communicated by/to the terminal via the protected channel 36 or via additional ports 39. In convenient embodiments, the additional ports 39 may include e.g. an SD card reader, which may be used e.g. to collect transaction data that may be periodically communicated to the one or more programme managers.

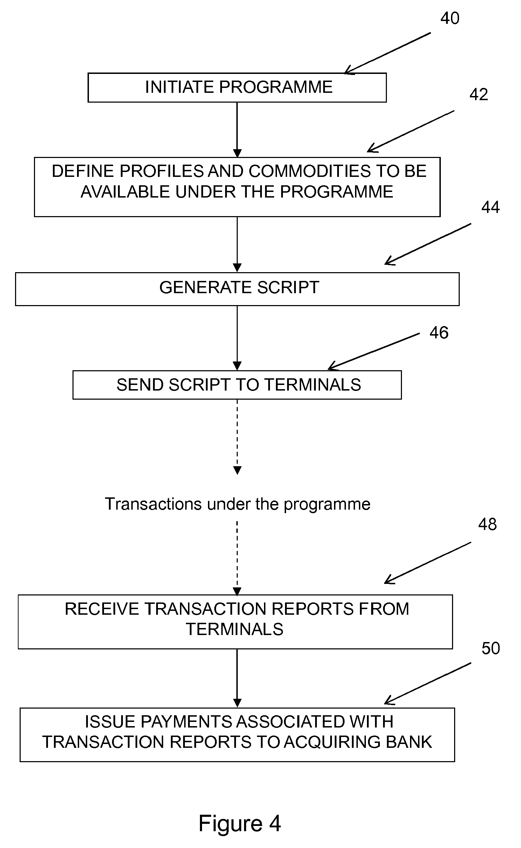

Figure 4 shows in flow diagram form a method of managing programmes according to a general embodiment of the invention.

A programme is a set of commodities (and possibly virtual currencies, which we refer to as "points") that may be made available to users. In a first step 40, a programme is initiated by a programme manager 16. The commodities (nature and amounts) as well as the points made available to users as part of a programme may be defined 42 based on a set of profiles that identify a group of users as entitle to a specific subset of the commodities and points available as part of the programme. Each user may be entitled to benefit from multiple programmes. Accordingly, a user's card will hold one or more programmes, and each programme will hold a profile identifier, a points balance, and a set of commodities available through that programme. Although the invention will be further described mainly by reference to transactions involving commodities, the person skilled in the art would understand that the transactions according to the invention may involve a combination of commodities and points, or even just points available under a programme.

A programme manager defines a programme or set of programmes and a set of rules to specify how each programme will apply to the different user profiles. A programme manager then creates 44 scripts that are provided to the payment devices, via the terminals or the card issuers. In this example, a script may be used to establish a new programme. However, in the case of programmes already in place, steps 42 to 46 may be used to delete an existing programme or update the balances of commodities and/or points available via an existing programme. The use of profiles associated with each programme allows the programme manager to distribute a single script to all users, where the use of the script will be determined based on the profile associated with the user. In preferred embodiments, the scripts are distributed to the cards by the terminal when they enter in contact. Conveniently, the scripts may be generated without requiring any input data from the card. In some embodiments, the scripts are generated prior to the card and terminal establishing a connection.

After transactions have occurred, a programme manager receives 48 transaction reports from the terminal via the banking infrastructure, which the programme manager uses to pay 50 the required amounts to the acquiring bank of the merchant whose terminal was used in the transactions.

In some embodiments the programme manager may be able to communicate directly with the terminal in order to provide scripts for the cards or collect transaction reports.

In some embodiments, a terminal may be programmed to convert commodity units into points or real currency equivalents, such that the transaction information sent by the terminal to the banking infrastructure via the acquiring bank is in the usual format for a currency based transaction.

In convenient embodiments, a programme manager may agree with a merchant on the monetary value associated with each commodity unit and/or each point unit. Upon receipt of a transaction report, the amounts of points/commodities that have been transacted at a merchant's terminal may then be converted into a corresponding monetary amount based on the pre-existing agreement, and the amount may be paid to the merchant's account. Depending on the specific implementation, this conversion may be made by the programme manager itself, the banking infrastructure, either of the card issuer or acquirer's bank, or an entity that performs the function of some or all of these. The person skilled in the art would appreciate that the agreed rules for conversion of the commodity/point amounts into a suitable currency amounts may be regularly modified or updated as required, and the particulars of the elaboration and maintenance of these rules are not important to understand how embodiments of the invention function and may be implemented.

In convenient embodiments, transaction infrastructures currently in place may be used to implement the invention. In such embodiments, programmes may be limited by current network constraints. For example; a programme may have up to in the order of 65,536 different profiles, up to about 256 commodities per programme and the infrastructure as a whole may support ion the order 4,294,967,294 programmes. In some embodiments, a commodity balance may be in the range 0 to 255. In some embodiments, there may be one points balance per programme, which may take a value of between 0 and 999,999,999,999. The person skilled in the art would understand that these numbers are mere indications and that different capabilities lay be available depending on the devices and data transfer capabilities used.

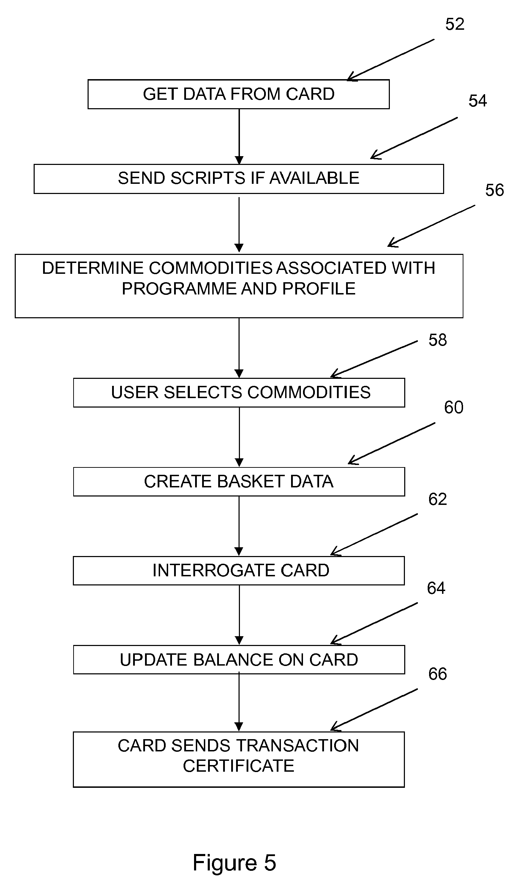

Figure 5 shows in flow diagram form a method of performing a transaction according to a general embodiment of the invention. After a transaction between the payment device (hereafter referred to as the card) and the terminal has been initiated, the terminal interrogates 52 the card to define what programmes are available on the card and the profile identifier associated with each programme. In practice, as further discussed below, the terminal issues a GET DATA command for programmes held by the card, and the card returns a dynamic list of programmes held together with some management information. The terminal may also determine, based on information from the card, whether it holds any scripts that need to be sent 54 to the card, e.g. to update or add a programme. Scripts are distributed to the terminals by the programme manager, see above, e.g. via a banking infrastructure. As will be further described below, a token associated with the card is returned by the card together with the response to the application selection command, in order to locate any per card scripts that the terminal may hold and that need to be given to the card. A PUT DATA command to the programmes tag is used to add, modify or delete a programme from the card. Next, the terminal determines 56 the commodities associated with the detected programmes and profiles on the card, and displays them to the user, e.g. by means of a display. A GET DATA command for programme data is used to return programme data for each of the programmes held by the card. The user then selects 58 the commodities that they wish to acquire. The terminal creates the data structure 60 to select the programme and the amount of commodities to deduce from the appropriate commodity balance in each selected programme (i.e. creates a "basket"). In practice, a PUT DATA command to programme data selects the programme to be used for a transaction.

Advantageously, a PUT DATA command may be protected by a Message Authentication Code (MAC) that may either be card, profile or programme-specific. A card-specific MAC counter may exist in two forms, a global one that is used to add/remove/modify programmes held by a card, and a specific one per-programme that may be used for card-specific allocations within a programme. In some embodiments, asymmetric mechanisms to sign the scripts such as elliptic curve signature schemes may be used instead of a MAC.

In other embodiments, the terminal may display the programmes that are available and the commodities available under each programme, such that a user may choose both the commodities to purchase and the programme through which these commodities are purchased. Then, the card determines 62 whether the available balance for the requested commodities in the selected programmes is sufficient. If not, the card may refuse the transaction. If yes, the card updates 64 the appropriate (i.e. as specified in the data sent by the terminal) commodities balances. The card then sends 66 a signed transaction certificate to the terminal. The transaction certificates are sent to the programme manager directly, if the terminal is working online, or periodically as transaction reports if a connection is not available. In convenient embodiments, the authenticity of the transaction is asserted using any conventional Offline Data Authentication method available under EMV specifications, such as Static Data Authentication (SDA), Dynamic Data Authentication (DDA) or Combined Dynamic Data Authentication/Application Cryptogram Generation (CDA). In preferred embodiments, CDA is used whereby the card generates a dynamic signature in response to a GENERATE AC command, which is then verified by the terminal (see Section 6.6 EMV 4.2 Book 2). The Transaction Certificate (TC) or Authorization Request Cryptogram (ARQC) generated by the card, separately or as part of the dynamic signature using CDA offline authentication represents a digital signature of the transaction details, which can be verified by the card issuer once a connection can be established. When a connection with a banking infrastructure is available at the time of transaction, the ARQC generated in response to a GENERATE AC command may be checked in real time by the issuer, as would be the case in conventional EMV transactions.

Before completing a transaction, the cardholder is verified by any appropriate Cardholder Verification Method. In preferred embodiments, the cardholder is verified offline by entering a personal identification number (PIN). Other methods such as online PIN authentication, use of biometric data, etc. may also be used instead or in addition with the above.

In preferred embodiments, commodities may be represented on the card as sets of commodity identifier/balance pairs, where each pair comprises a first byte that is a commodity identifier reference, and a second byte that represents the available balance of that commodity. The person skilled in the art would understand that such embodiments are particularly advantageous because they allow transactions to be safely completed offline, with only the periodic sending of a transaction report requiring a connection. This is particularly advantageous when connection being unavailable is the default rather than the exceptional situation.

In some embodiments, the commodities balances may not be stored on the card but may be held on a database on a server, e.g. by the programme manager. In such embodiments, online transactions may be completed in a similar way as above, except that the basket information is sent by the terminal to the banking infrastructure (directly or via the acquirer's bank), that communicates this information to the appropriate programme managers (directly or via the card issuer) in order to determine whether the available balance is sufficient to authorise the transaction. In such embodiments, when connectivity is unavailable, transactions may be completed offline, followed by reconciliation when the terminal can access a connection and send transaction reports to the programme managers. In such embodiments, transactions may advantageously be associated with a ceiling for the amount of commodities that may be purchased offline, and/or with a mechanism to determine the time since the payment device was last connected to the banking infrastructure, and block or limit transactions after a certain time offline.

In order to manage the specific functionalities of the invention within existing financial transaction systems such as EMV, specific tags are defined for use with the GET DATA and PUT DATA commands mentioned above. These tags are defined in order to manage current programmes ("Programme Management" tag, e.g. "9F73"), manage detailed data of a specific programme ("Programme Data" tag, e.g. "9F75"), manage a card ("Card Management" tag, e.g. "9F76"), and manage allocation of commodities and commodities balances ("Allocation Instruction" tag, e.g. "9F79"). The tags may be associated with read and write access conditions, where writing is advantageously secured for the programme management, card management and allocation instructions tags.

The Programme Management tag permits the reading and writing of programme data. When reading from the Programme Management tag, the data returned consists of a set of data for each programme held by the selected payment application. In some embodiments, the data returned comprises: a data structure version number (for example, a one byte identifier), a maximum number of programmes that may be supported by the card (for example, a one byte value specifying a number between e.g. 0 and 20, where the maximum number is set upon personalisation of the card), a programme provider identifier (for example a 4 bytes value identifying e.g. an organisation that funds the programmes present on the card i.e. the provision of the commodities to the user) a current global card MAC counter (for example a 2 bytes field), a batch identifier (for example, a 2 bytes value, set in production to a personalised value associated with the card for tracking), zero or more sets of programme management data (each of which may for example be 12 bytes long). The programme management data (one for each programme held by the card), comprise a programme identifier, a current profile identifier, a current per card (per programme) MAC counter, a current per profile MAC counter and a current per programme MAC counter. For example, the 12 bytes of data mentioned above for programme management data may be allocated such that 4 bytes are available for the programme identifier, and 2 bytes of data are available for each of the other four fields mentioned. The person skilled in the art would understand that data such as the programme provide and batch identifiers are used in some embodiments of the invention for management of the system and are not necessary to complete a transaction according to the invention. Accordingly, in some embodiments these identifiers may be omitted or other management information may be stored instead or in addition.

When writing Programme Management data, such as to create, delete or update a programme on the card, the following data must be provided: a programme identifier, a profile identifier, a card global MAC counter for the script used to write the data, a set of flags (see below), the number of commodity pairs (identifier and balance) present in the programme (strictly speaking, this data field is redundant since it can be determined from the length of the set of commodities data pairs below), an enciphered programme MAC key or asymmetric signing mechanism, and a message authentication code (calculated using the card global MAC counter provided). The PUT DATA command is rejected if the card global MAC counter is less than or equal to that currently held for the card, and if successfully executed, the current held card value is updated to that provided. The programme MAC key is used for programme and profile data updates and allocations, and is enciphered with the card SMC session key. The following optional data must be provided depending on the command performed: a card MAC counter setting, a profile MAC counter setting, a programme MAC counter setting, a programme provider identifier, a points balance for the programme and a set of commodity pairs (identifier and balance) for the programme. The set of flags may for example be contained in 1 byte, and is used to determine the action that should be performed, i.e.: if the programme already exists, whether it should be reinitialised or updated; if the programme is to be deleted; if the programme is to be blocked or unblocked (e.g. if the programme is currently blocked and this bit if left clear); if the points balance is to be updated to the value given; if the commodity information is to be updated to the values given; if the card (or programme) MAC counter is to be set to the value given; if the profile and MAC counters are to be set to the value given; if the programme provider identifier is to be set to the value given. If the programme is to be deleted, all references to it are removed from the card. If the programme is being updated (i.e. it is already present on the card and the corresponding bit is set), then the key, card, programme and profile counters are left unchanged regardless of the values provided (if any). If points balances or commodities are not provided then the current settings are left unchanged (if the programme was already present on the card), or the values set to zero (if a programme is being added or reinitialised).

The Programme Data tag permits the reading of programme data for each programme held (i.e. via a repeated GET DATA command at step 56 above), or the writing of data prior to performing a transaction (i.e. PUT DATA command to programme data to select the programme to be used for a transaction at step 60 above). When a GET DATA command is executed to read programme data, the card returns the detailed Programme Data for programmes held. Each subsequent invocation of the command returns the data for more programmes held. If called after the last set of programme data has been returned, subsequent calls will just return the number of programmes held. Any other (i.e. other than a command to read programme data) Application Protocol Data Unit sent to the card (e.g. a GET DATA for another tag) will reset the list so that the programme data may be read again. Advantageously, if a PUT DATA command with a programme identifier (i.e. a command to write programme data) precedes a GET DATA command to read programme data, then the reading of the programme data will start with the programme identified in the PUT DATA command. In this case, only one set of programme data is returned in the first read response, corresponding to the programme identifier given. Subsequent GET DATA commands will return the rest of the programme data. Each response to a read Programme Data command contains at least one set of programme data. If more than one set of programme data will fit within a response, multiple sets of programme data may be returned in each call. Preferably, a single instance of programme data will not span two responses. Each response to a read Programme Data command contains the following data: the programme identifier, the current points balance, the number of commodity pairs (identifier and balance), and the set of current commodity details (i.e. pairs with current balance). As mentioned above, in a convenient embodiment of the invention, the commodity details may comprise pairs of byte, where one byte corresponds to the commodity identifier reference, followed by a byte holding the current balance. In such embodiments, both the identifier and the balance may be values between 0 and 255. In some embodiments, constraints on the size of responses supported may limit the number of commodity pairs to 100.

When writing Programme Data (i.e. a PUT DATA command is addressed to the Programme Data tag), the command does not immediately update the commodity counters, but sets the amounts that are to be deducted from the balances when the transaction is completed. In practice, these amounts will be deducted from the specified balances when a Generate Application Cryptogram command is subsequently processed in the same transaction. The command also checks that there is sufficient balance available and will report an error in the negative. The command may be repeated, and may also be used in order to select which programmes to start with when reading Programme Data (see above), with the number of commodity pairs set to zero. The data provided in a write Programme Data command comprises the programme identifier, the number of commodity pairs, and the commodity pairs themselves (i.e. identifier of the commodity to use and amount to be deducted). In some embodiments, up to 10 commodity pairs may be provided for a single transaction. In some embodiments, the card may in addition or instead request an amount of points to be transacted as part of the Card Data Object List (CDOL) sent by the card to the terminal before executing a Generate AC command. After a write Programme Data command has been executed, when a Generate AC command is executed, the authorised amount is deducted from the points for the programme, and the commodities balances are decremented by the values provided. If one or more limits would be exceeded as a result of this transaction, none are updated. In some embodiments, only the commodities for which the available balance is sufficient are updated. In some embodiments, instead of using the PUT DATA to write programme data as explained above, the process may include a request for the transaction data (commodities and points to be transacted) as part of the CDOL1 list. The terminal may then, as would happen in a normal EMV transaction, send this data and request a cryptogram using the generate AC command.

The Issuer Application Data (IAD) returned comprises: a Key Derivation Index, the Cryptogram Version Number, the Card Verification Results, the Programme identifier, and zero or more commodity pairs data (i.e. commodity identifiers and amounts by which the balances were decremented). The programme identifier and commodity data are included in the Message Authentication Cryptogram calculation that accompanies the response. The Cryptogram Version Number indicates when this structure of Issuer Application Data is used. Preferably, in order to allow for conventional transactions to be supported by the same card, when the last PUT DATA command before the Generate AC command does not identify a programme (or when no programme is present on the card), conventional card management methods apply, a conventional IAD structure is used rather than the above, and separate accumulators and counters will be used (independent of the programme specific data).

The Allocation Instruction tag is used in PUT DATA commands to modify the balances associated with a programme, and add or remove commodities that are available through a programme. An Allocation instruction command comprises the following fields: a programme identifier, a profile identifier, a counter used in the MAC calculations, an indication of the targeting (i.e. to programme, profile or card), a set of flags, and a MAC. The flags indicate whether: points should be set to the value given, points should be increased by the value given, points should be decreased by the value given, commodities should be updated, whether this is a "correction" instruction (to correct the effect of a previously sent script). Optionally, the command may also comprise: a points value and/or a set of commodities data that comprise a commodity identifier, an amount and a set of flags. These flags indicate whether the commodity balance should be set to the amount given, increased or decreased by the amount given, or whether the commodity should be removed. The set of commodity flags also comprise a flag to indicate the action to perform if a ceiling is reached (i.e. execution of the allocation command would result in a balance that is below zero or above the maximum balance for that commodity). In such cases, the allocation may either: succeed and leave the balance at the ceiling value, or the whole allocation command may be rejected. Conveniently, only those commodities that need to be altered may be provided in an allocation command. If an allocation instruction is targeted to a programme, it will be applied to the programme if held by the card (and provided that the conditions imposed by the counter and MAC are met, i.e. the authenticity of the script is verified and the card has not seen the script yet). If the allocation instruction is targeted to a particular profile of a programme, the instruction will only be accepted on the additional condition that the profile identifier in the command matches that currently held for that programme.

The correction flag may be used when a programme manager wishes to apply an urgent correction, i.e. an out-of-sequence script, without preventing delivery of previously generated scripts that may not have yet been delivered to a card (i.e. that have been generated since the last time the card established a contact with a terminal). After verifying a programme, card or profile MAC (depending on whether the allocation script targets a programme, profile or card specific programme), if the correction flag was not set, the corresponding MAC counter is simply updated to that given. However, if the correction flag was set, then the MAC counter is added to the corresponding list of MAC counters seen. For example, if three scripts are delivered to a card in sequence, the counter will simply be updated to N, N+1 then N+2. However, if a programme manager wishes to apply urgent corrections, for example after N has been delivered but N+1 and N+2 have not yet been delivered, a script N+3 will be delivered with the correction flag set. When the card receives the script, the counter associated with it will be greater than the current value but as the script is flagged as a correction it will not change the current mark counter (doing so would invalidate scripts N+1 and N+2). Instead, it will be added to the list of scripts seen for that counter. When the card then receives N+1 and N+2, the counter will be updated and these will be added to the list of scripts seen for that counter. When the list holds a contiguous sequence together with the last counter seen, it can then simply be "cleaned up", i.e. all items in the list are removed and the counter is set to N+3. A subsequent N+4 script would time out the N+3 script if not delivered when N+4 is generated, but if a card establishes a contact at that point and a terminal holds both N+3 and N+4 scripts, then script N+3 will be deployed first, followed by N+4.

As the skilled person would understand, the implementation described above only requires minimal changes at the terminal compared to a conventional EMV transaction since all that is required is that the terminal allows the GET DATA and PUT DATA commands as outlined to be addressed from the transaction application to the specified range of tags on the card (i.e. the Programme Management, Programme Data, Card Management and Allocation Instruction tags) described above. Additionally, returning the commodities information as part of the IAD as described above also allows to limit the changes required at the terminal in order to implement the process.

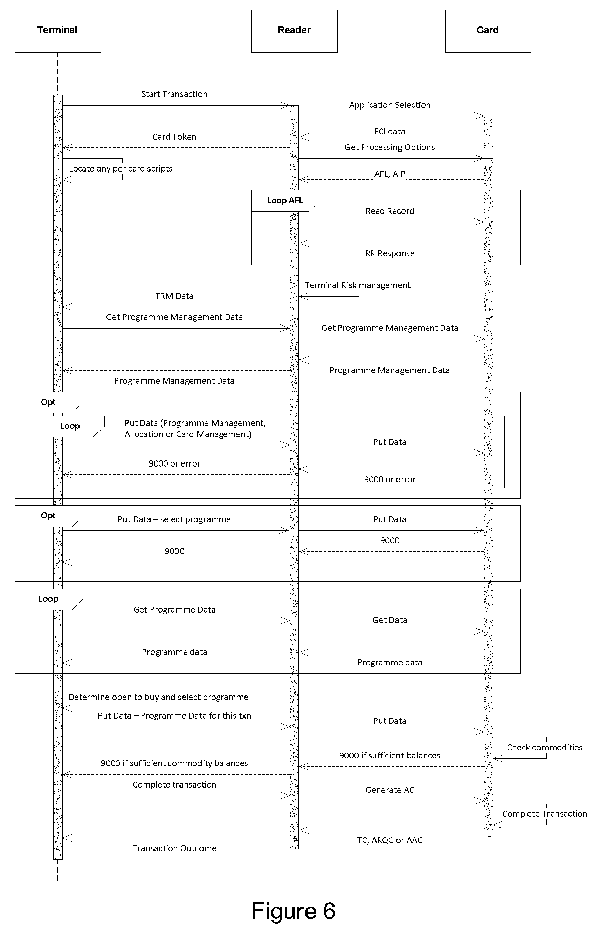

Figure 6 shows a detailed example of a transaction flow between a card and a terminal, according to a general embodiment of the invention. First, as would be the case in a normal financial transaction under the EMV protocol, a transaction is initiated, an application selected on the card with a SELECT command and processing options requested from the card with a GET PROCESSING OPTIONS command. However, an additional step is included whereby the card includes in the response to the SELECT command an additional data element which comprises a token for the card. This token is a unique value per card that is readable by the payment application and is unique to that payment application.

It is used to allow the terminal to locate any script that needs to be passed to the card, i.e. card specific scripts that may be applicable to the payment application. Preferably, the token is contained in a tag that is already defined in the File Control Information (FCI) data (in particular, in the FCI Issuer Discretionary data field). Advantageously, this tag, if found on the card, is already conventionally given to the terminal as part of an EMV contactless transaction, such that a minimal modification may be required at the terminal whereby the tag is returned even when performing a contact transaction. As would be the case in a conventional transaction, the card responds to the GET PROCESSING OPTIONS command with Application File Locator and Application Interchange Profile data, following which the required records are read from the card, and conventional Terminal risk management, data authentication, processing restrictions and cardholder verification steps are performed. Following this, a GET DATA command is issued to get the Programme Management Data. This informs the terminal of the identity of the programmes supported by the card, the current profile identifier for each programme and a set of MAC counters that are used to define if scripts need to be sent to the card (i.e. if unseen scripts targeted to programmes or profiles held by the card are available at the terminal). In the affirmative, the relevant scripts are sent to the card with PUT DATA commands, to perform Programme Management (create, delete or update a programme), Allocation (modify the balances of commodities/points associated with a programme or add/remove commodities in a programme) or Card management (block/unblock a card or programme). A PUT DATA command directed to the Programme Data tag may be issued at this stage such that the subsequent step of reading data starts with the programme identified in this command (rather than looping through all available programmes, see above). Next, a GET DATA command is issued to read the Programme Data associated with each programme on the card. The terminal then determines based on the detailed programme data read, which commodities are available. The desired commodities are selected by the user, and the terminal generates a PUT DATA command for writing Programme Data. As described above, the write Programme Data command is used by the card to record an amount to be deducted from each commodity balance in the specified programmes, upon completion of the transaction. The card then checks that the specified commodity balances are sufficient to allow the deduction of the amounts recorded as a result of the write Programme Data command. If the card responds in the affirmative, the terminal issues a Generate AC command, the card completes the transaction (i.e. updates the appropriate balances) and responds with a signed transaction certificate (if the transaction is approved), authorisation request cryptogram (if online authorisation is requested) or application authentication cryptogram (if the terminal risk management fails and the terminal rejects the transaction).

As the person skilled in the art will appreciate, modifications and variations to the above embodiments may be provided, and further embodiments may be developed, without departing from the spirit and scope of the disclosure. Reference to standards and proprietary technologies are provided for the purpose of describing effective implementations, and do not limit the scope of the disclosure.

## Claims

1. A method of transacting with a transacting device using multiple balances, the method being implemented by interaction between a payment device and a terminal of a transaction system, the method comprising:
retaining multiple balances on a payment device;
establishing a transaction between the payment device and a terminal of the transaction system, wherein the transaction is defined by value amounts in a plurality of value types;
completing the transaction by debiting multiple balances of the transaction card by amounts corresponding to the value amounts in the plurality of value types defining the transaction.

2. The method of any preceding claim, wherein multiple sets of balances coexist on a payment device.

3. The method of any preceding claim, further comprising providing instructions to specifically modify the balances associated with one or more of the multiple balances.

4. The method of claim 3, wherein instructions are generated prior to the initiation of the transaction, without requiring data from the payment device.

5. The method of claim 4, further comprising delivering an ordered sequence of instructions to a payment device.

6. The method of claim 5, further comprising identifying instructions that should be applied out of sequence without preventing the delivery of subsequent instructions in a sequence.

7. The method of claim 6, further comprising storing information identifying the instructions applied, until instructions have been applied that comprise an ordered sequence up to and including the out of sequence instructions.

8. A transaction system for performing transactions with multiple balances within a single transaction, comprising:
a payment device programmed to record multiple balances; and
a terminal programmed to interact with the payment device in order to complete a transaction by debiting multiple balances of the payment device within a single transaction.

9. The method of transacting of any of claims 1 to 7 or the transaction system of claim 8, wherein the multiple balances relate to different value types.

10. The method of transacting or the transaction system of claim 9 wherein each set of balances is associated with a profile identifier, and administration of a set of balances is conditional on the profile identifier.

11. The transaction system of any of claims 8 to 10, wherein the terminal is programmed to provide instructions to specifically modify the balances associated with one or more of the multiple balances.

12. The transaction system of claim 11, wherein the instructions are generated prior to the initiation of the transaction, without requiring data from the payment device.

13. The transaction system of claim 12, wherein the payment device is programmed to receive an ordered sequence of instructions and identify instructions that should be applied out of sequence.

14. The transaction system of claim 13, wherein the payment device is programmed to store information identifying the instructions applied, until instructions have been applied that comprise an ordered sequence up to and including the out of sequence instructions.

15. The method of any of claims 1 to 7, 9 or 10, or the transaction system of any of claims 8 to 14, wherein the payment device is programmed to provide a token to the terminal, wherein the token can be interpreted by a payment application to determine whether instructions to administer balances or sets of balances should be communicated by the terminal to the payment device.

16. The method of any of claims 1 to 7, 9, 10 or 15 or the transaction system of any of claims 8 to 15, wherein the terminal is programmed to interrogate the payment device to obtain information about each of the balances and/or sets of balances recorded on the payment device.

17. The transaction system of any of claims 8 to 16, further comprising a programme manager that provides commodities to users by modifying one or more balances on the payment device.

18. The method of any of claims 1 to 7, 9, 10, 15 or 16 or the transaction system of any of claims 8 to 17, wherein the payment device and terminal are programmed according to EMV specifications.

19. A payment device programmed to perform the method of any of claims 1 to 7, 9, 10, 15, 16 or 18.

20. A method of providing commodities to users as part of a programme, wherein the method comprises providing a user with the payment device of claim 19.
